# EUROPÄISCHE PATENTSCHRIFT

(11) **EP 0 726 103 B1**
(45) Veröffentlichungstag und Bekanntmachung des Hinweises auf die Patenterteilung: **13.10.1999**
(21) Anmeldenummer: 96101745.6
(22) Anmeldetag: 07.02.1996
(51) Int. Cl.: B21D 22/02, B21D 9/15, F16K 27/02

(54) **Verfahren zur Herstellung eines Ventilgehäuses**
Method of manufacturing a valve body
Procédé pour produire l'abri d'une soupape

(30) Priorität: 08.02.1995 DE 19504120
(43) Veröffentlichungstag der Anmeldung: 14.08.1996
(73) Patentinhaber: Bürkert Werke GmbH & Co., D-74653 Ingelfingen (DE)
(72) Erfinder: Hettinger, Gerhard, D-74653 Ingelfingen (DE); Rutsch, Walter, D-74676 Niedernhall (DE)
(74) Vertreter: Degwert, Hartmut, Dipl.-Phys.

(56) Entgegenhaltungen:
- WO-A-94/20234
- DE-A- 2 722 824
- GB-A- 2 228 885
- US-A- 3 300 844

## Beschreibung

Die Erfindung betrifft ein Verfahren zur Herstellung eines Ventilgehäuses mit einem metallischen Ventilkörper.

Metallische Ventilkörper werden bisher überwiegend durch Gießen von Stahl oder Aluminium sowie durch Fressen von Messing oder Schmieden von Ventilrohlingen aus Stahl hergestellt, die spanend weiterbearbeitet werden. Bei gegossenen Ventilrohlingen ist die Homogenität des Metallgefüges unbefriedigend. Das Material neigt zur Karbidausscheidung, interkristallinen Korrosion, Lunkerbildung, Einschlüssen und anderen Gefügefehlern. Derartige Fehler können zur Kontaminierung von Prozeßleitungen, Undichtheit des Ventils oder zu seiner Zerstörung durch Korrosion führen. Überdies ist das Schweißverhalten von derartigen Ventilkörpern unbefriedigend. Bei durch Pressen von Messing oder Schmieden von Stahl hergestellten Ventilkörpern werden diese Mängel weitgehend vermieden, jedoch sind Schmiedeverfahren sehr aufwendig, da der gesamte Innenraum des Ventilkörpers mit spanenden Verfahren herausgearbeitet werden muß.

Aus der US-A-3 300 844 ist es bereits bekannt, ein metallisches Ventilgehäuse durch Umformen eines zylindrischen Rohrabschnitts in einer Prägeform herzustellen. Die Umformung geschieht jedoch in mehreren Schritten und kann nicht kalt erfolgen. Sie erfordert das Einführen von Gegenstempeln in das Innere des Rohrabschnitts zur Ausbildung von konkaven Wölbungen. Auch dieses bekannte Verfahren ist aufwendig.

Aus der GB-A-2 228 885 ist ferner ein Verfahren zum Umformen eines Hohlkörpers bekannt, bei dem die Wandung von einer Seite mittels eines Stempels eingedrückt wird und auf der gegenüberliegenden Seite eine Abflachung entsteht. Die Umformung erfolgt in einem einzigen Schritt unter Verwendung eines Füllmaterials. Mit diesem Verfahren lassen sich aber keine relativ komplexen Formteile erzeugen, wie sie für Ventilkörper benötigt werden.

Durch die Erfindung wird ein Verfahren zur Herstellung eines Ventilgehäuses mit metallischem Ventilkörper zur Verfügung gestellt, das mit einem Bruchteil des Aufwandes herkömmlicher Schmiede- oder Umformverfahren ausgeführt werden kann und Ventilkörper hervorbringt, die frei von den Mängeln der mit Gießverfahren hergestellten Ventilkörper sind und darüber hinaus einen minimalen Materialeinsatz erfordern.

Ausgehend von dem Verfahren nach der US-A-3 300 844 schafft die Erfindung ein Verfahren zur Herstellung eines Ventilgehäuses gemäß Anspruch 1.

Metallrohre in geeigneter Qualität und Materialzusammensetzung stehen für alle denkbaren Anwendungsfälle von Ventilen zur Verfügung. Die Verformung eines Rohrabschnitts durch Druckeinwirkung von außen hat keinen nachteiligen Einfluß auf die Materialbeschaffenheit. Eine spanende Nachbearbeitung ist überflüssig. Die Wandstärke des Ventilkörpers ist nirgends größer als notwendig, so daß Gewicht und Material eingespart werden. Die mit dem erfindungsgemäßen Verfahren hergestellten Ventilkörper haben ähnliche Vorzüge wie die, welche mittels herkömmlicher Schmiedeverfahren hergestellt werden, jedoch betragen die Herstellungskosten nur einen kleinen Bruchteil derjenigen bei Anwendung von Schmiedeverfahren.

Es wurde auch bereits vorgeschlagen, rohrförmige Ventilrohlinge durch Anwendung von extrem hohen, hydrostatischen Innendrücken zu Ventilkörpern umzuformen. Diese Umformungsverfahren erfordern jedoch den Einsatz von sehr aufwendigen Maschinen, die einen Innendruck von mehr als 800 bar erzeugen, bei dem das Material zu fließen beginnt. Zum Ausformen enger Konturen sind noch weit höhere Drücke erforderlich.

Bei dem erfindungsgemäßen Verfahren wird hingegen die Wandung des Rohrabschnitts lediglich verbogen und, in gewissen Grenzen, gedehnt. Dies erfolgt durch Einwirkung einer äußeren Kraft, die das Rohr verformt, und einen dabei entstehenden hydraulischen Innendruck, der die gegenüberliegende Wandung des Rohres an eine Außenform anpaßt.

Für die Durchführung des Verfahrens wird der Rohrabschnitt vor seiner Verformung mit einem Füllmaterial vollständig ausgefüllt, das nach Beendigung der Verformung wieder entfernt wird. Während der Verformung wird der Rohrabschnitt an seinen Enden durch eingeführte Verschlußstempel geschlossen gehalten, um das Füllmaterial am Austreten zu hindern. Ein besonders geeignetes Füllmaterial ist Sand; noch bessere Ergebnisse werden mit plastischem Material wie Wachs, insbesondere Stearin, oder mit einer elastischen Masse wie Gummi oder Elastomer erzielt.

Vorteilhafte Weiterbildungen der Erfindung sind in den Unteransprüchen angegeben.

Weitere Vorteile der Erfindung ergeben sich aus der folgenden Beschreibung und aus der Zeichnung, auf die Bezug genommen wird. In der Zeichnung zeigen:
- Figur 1: schematisch einen aus einem Rohrabschnitt bestehenden, an seinen Enden durch formschlüssig eingesetzte Verschlußstempel verschlossen gehaltenen Rohling zwischen einer Preßform und einem Stempel;
- Figur 1a: eine Variante der in Figur 1 gezeigten Anordnung;
- Figur 2: schematisch einen zu einem Rohling verformten Rohrabschnitt in axialer Schnittansicht;
- Figur 3: den Rohling in Draufsicht;
- Figur 4: den Rohling nach Abtrennung eines kreisscheibenförmigen Wandungsteils im axialen Schnitt;
- Figur 5: den Rohling von Figur 4 in Draufsicht;
- Figur 6: eine geschnittene Perspektivansicht eines fertigen metallischen Ventilkörpers;
- Figur 7: einen axialen Schnitt durch ein unter Verwendung des Ventilkörpers hergestelltes Durchgangs-Membranventil;
- Figur 8: eine Variante des Rohlings, die für ein Sitzventil bestimmt ist;
- Figur 9: eine schematische Schnittansicht eines Sitzventils mit einem an diese Ventilform angepaßten Ventilkörper;
- Figur 10: einen Schnitt entlang Linie X-X in Figur 9;
- Figur 11: eine Draufsicht auf den Boden des Ventilkörpers; und
- Figur 12: einen Teilschnitt einer Variante des Sitzventils.

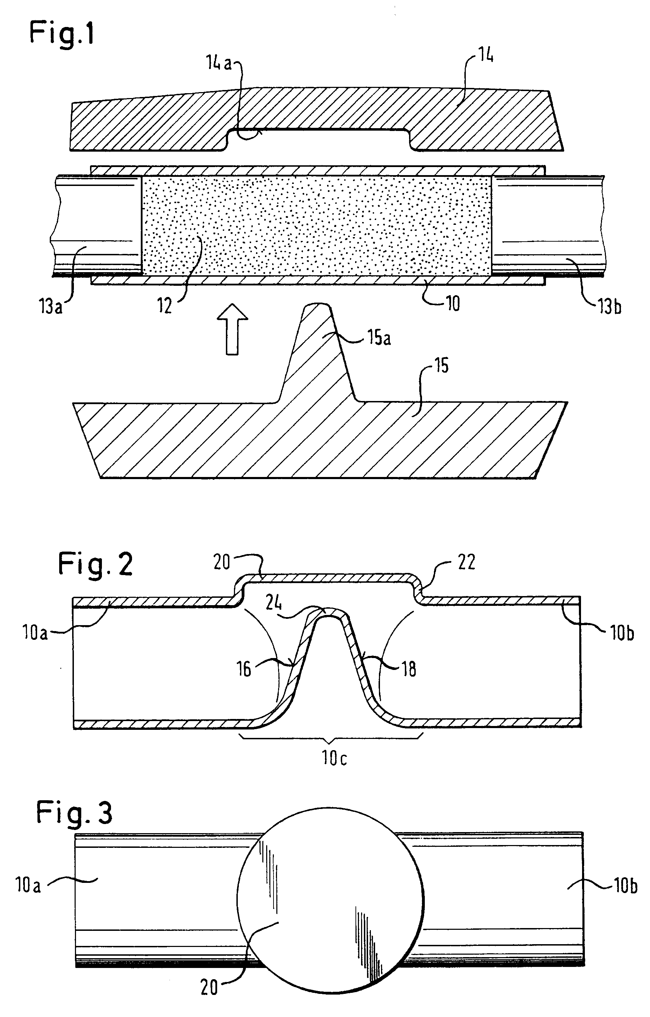

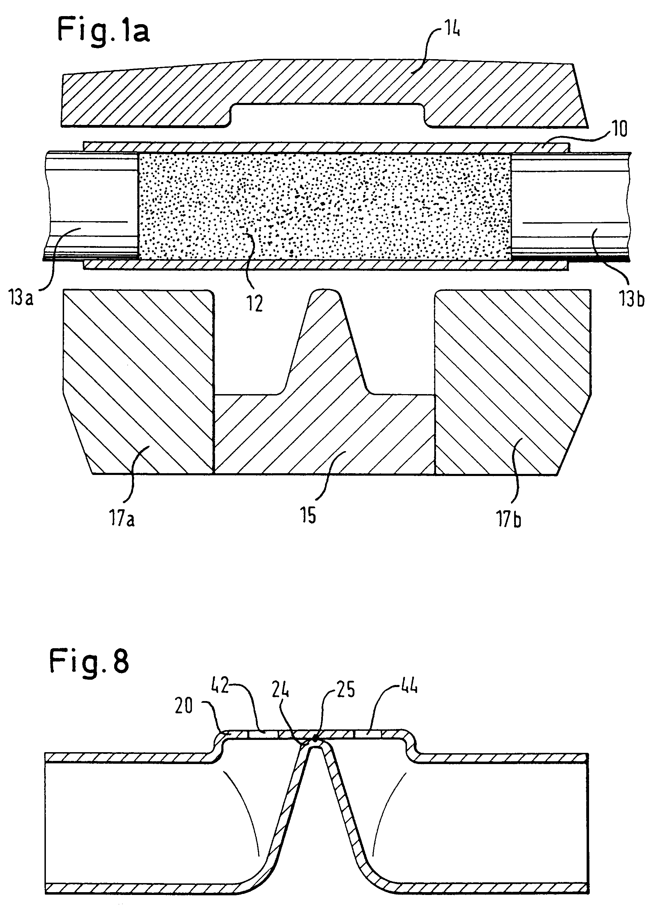

Bei dem erfindungsgemäßen Verfahren wird ein Rohrabschnitt 10 aus einem geeigneten metallischen Material zunächst mit einem Füllmaterial 12 wie Sand oder Wachs vollständig ausgefüllt. Der Rohrabschnitt 10 wird dann in eine Preßform eingebracht, die aus einer Matrize 14 und einem Stempel 15 besteht. Durch zwei formschlüssig in die Enden des Rohrabschnitts 10 eingeführte Verschlußstempel 13a, 13b wird das Füllmaterial am Austreten gehindert. Die Matrize 14 weist bei der gezeigten Ausführungsform eine kreisrunde Einsenkung 14a mit einem flachen Boden auf. In Gegenüberlage zu dieser Einsenkung 14a weist der Stempel 15 einen Höcker 15a auf. Der Stempel 15 wird in der durch einen Pfeil in Figur 1 angegebenen Richtung gegen den Rohrabschnitt 10 gedrückt, der in der Matrize 14 abgestützt wird. Der Höcker 15a drückt den zwischen den Enden des Rohrabschnitts gelegenen Mittelabschnitt seiner Wandung einwärts bis in die Nähe der gegenüberliegenden Innenfläche des Rohrabschnitts. Zugleich wird der dem Höcker 15a gegenüberliegende Wandungsteil des Rohrabschnitts 10 in die Einsenkung 14a der Matrize 14 hineingedrückt. Das Ergebnis dieser Verformung des Rohrabschnitts 10 zeigt Figur 2. Der entstandene Rohling weist zunächst an seinen Enden zwei rohrförmig verbliebene Anschlußstutzen 10a, 10b und dazwischen einen Mittelabschnitt l0c auf, der den eigentlichen Ventilkörper bildet. Er besteht aus einem höckerförmig einwärts verformten Wandungsabschnitt, der innenseitig zwei Fluid-Leitflächen 16, 18 aufweist, und einer gegenüberliegenden Abflachung 20, die kreisscheibenförmig ist und aus der Mantelfläche des Rohrabschnitts 10 nach außen vorspringt, wobei ein Ringbund 22 gebildet wird. Die Fluid-Leitflächen 16, 18 laufen gegenüber der Abflachung 20 in einem gemeinsamen Steg 24 zusammen.

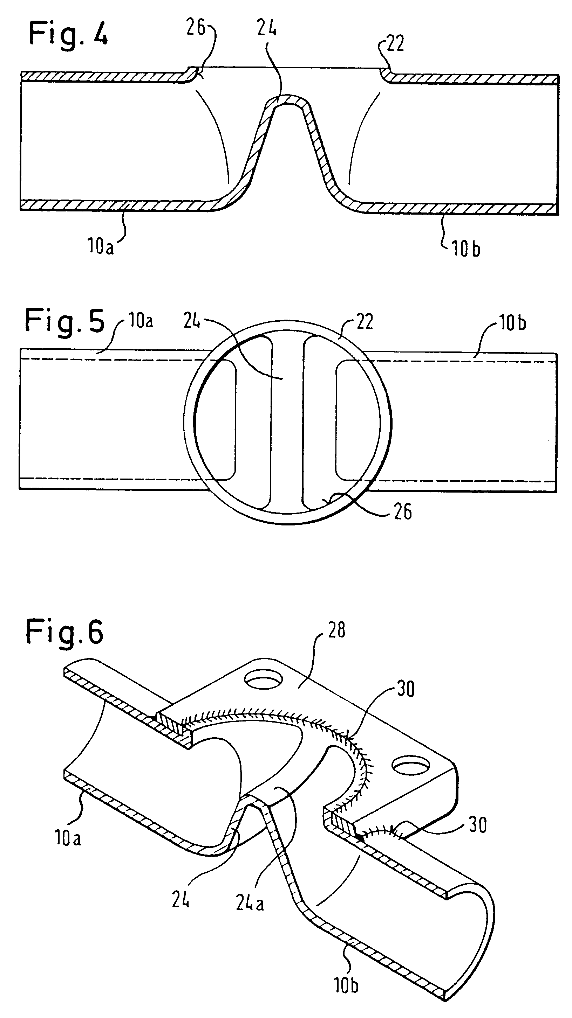

Wie in Figur 4 gezeigt, wird anschließend der Wandungsteil, welcher der kreisscheibenförmigen Abflachung 20 entspricht, abgetrennt, wobei der Ringbund 22 stehen bleibt. Dieser Ringbund 22 bildet nun die Berandung eines Durchbruchs 26, der in Draufsicht kreisrund ist. Er gibt den Blick auf den Steg 24 frei, der - wie in Figur 5 gezeigt - quer zur Achse des Rohrabschnitts 10 verläuft und an beiden Enden stetig in die Berandung des Durchbruchs 26 übergeht. Wie die Perspektivansicht in Figur 6 erkennen läßt, ist der Steg 24 konkav gekrümmt, weist jedoch eine flache Dichtfläche 24a auf.

Zur Fertigstellung des metallischen Ventilkörpers wird eine rechteckige Flanschplatte 28, die eine dem Außendurchmesser des Ringbundes 22 entsprechende Öffnung aufweist, um den Ringbund 22 herum aufgesetzt und befestigt, insbesondere durch Schweißnähte 30.

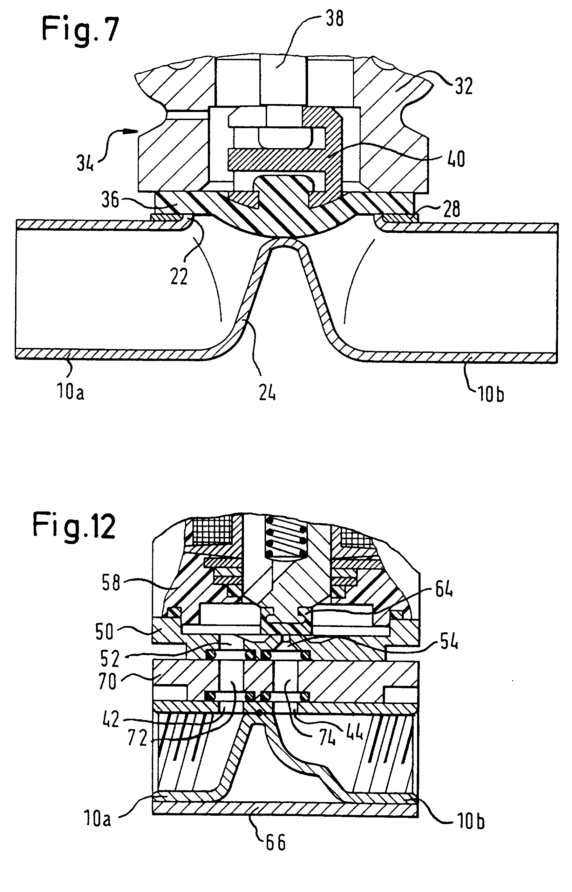

Der so fertiggestellte Ventilkörper eignet sich zur Verwirklichung eines Durchgangs-Membranventils der in Figur 7 gezeigten Art. Zwischen der Flanschplatte 28 und dem Gehäuse 32 eines nur teilweise gezeigten, herkömmlichen Ventilantriebs 34 ist eine Membran 36 eingespannt, an der ein Betätigungsstößel 38 des Ventilantriebs 34 über ein Kopplungsteil 40 angreift. Bei dem in Figur 7 gezeigten Schließzustand wird die Membran in Dichtanlage an dem Steg 24 gehalten. In diesem Zustand ist der Ventilantrieb 34 aktiviert. Bei deaktiviertem Ventilantrieb 34 hebt sich die Membran 36 von dem Steg 24 ab; das Ventil befindet sich dann in seiner Öffnungsstellung.

Ein Durchgangs-Membranventil dieser Bauart eignet sich auch für verschmutzte Medien, benötigt jedoch eine hohe Antriebsleistung.

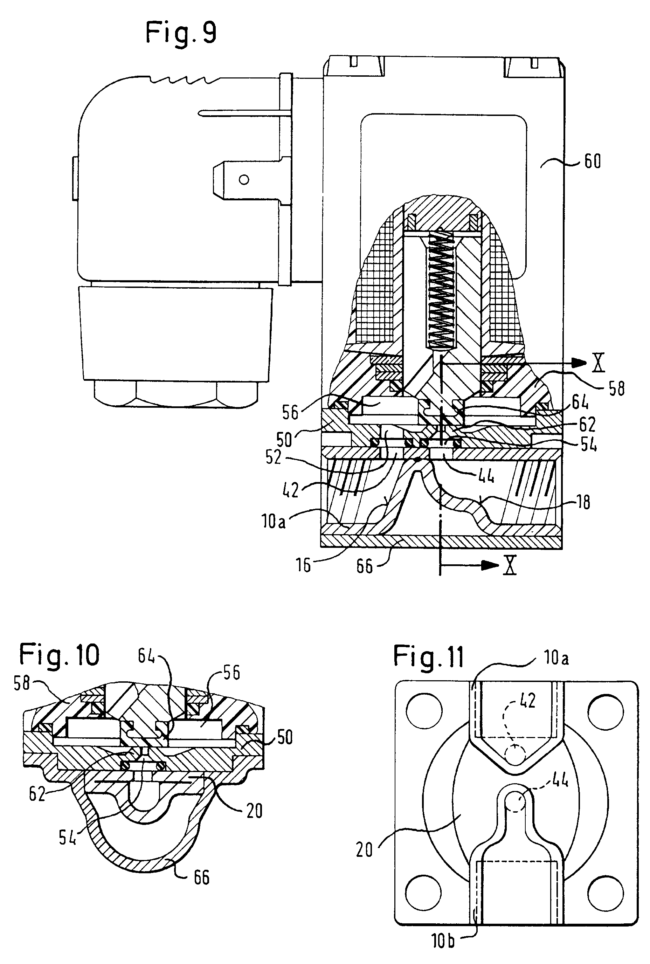

Bei der in Figur 1a gezeigten Variante der Vorrichtung zur Durchführung des Verfahrens ist der Stempel 15 zwischen zwei Formteilen 17a, 17b geführt, die ihn seitlich abstützen. Sitzventile benötigen eine weitaus geringere Antriebsleistung, die durch Einsatz von Vorsteuerventilen weiter vermindert werden kann. Das erfindungsgemäße Verfahren eignet sich auch zur Herstellung von Ventilkörpern für Sitzventile. Die Figur 8 zeigt einen Ventilkörper für ein Sitzventil. Bei diesem Ventilkörper ist der Steg 24 bis an die Innenseite der Abflachung 20 herangedrückt und dort zur Abdichtung bei 25 verschweißt. In der Abflachung 20 sind zwei Durchbrüche 42, 44 im Abstand voneinander angebracht.

Die Figuren 9 bis 12 zeigen ein Sitzventil mit metallischen Ventilkörper.

Bei dieser Ausführungsform wird prinzipiell in gleicher Weise wie in den Figuren 1 und 2 dargestellt verfahren; der den Boden des Ventilkörpers bildende Wandungsteil wird jedoch weiter eingedrückt, bis er an der gegenüberliegenden Abflachung 20 anstößt, und dort zur Abdichtung verschweißt. Ferner sind in der Abflachung 20 zwei getrennte, durch Bohrungen gebildete Durchbrüche 42, 44 angeordnet. Die Fluid-Leitfläche 16 verläuft etwas steiler als bei der zuvor beschriebenen Ausführung, und die Fluid-Leitfläche 18 weist ausgehend von dem Anschlußstutzen 10b zunächst einen steilen Anstieg, dann einen Wendepunkt und einen flacheren Abschnitt sowie abschließend wieder einen steilen Anstieg auf.

Eine rechteckige Ventilplatte 50 ist gegen die den Fluid-Leitflächen 16, 18 gegenüberliegende, einen Anschlußflansch bildende Abflachung 20 des Ventilkörpers angesetzt. Sie ist mit zwei Kanälen 52, 54 versehen, die mit den Durchbrüchen 42, 44 fluchten. Diese Kanäle 52, 54 sind jeweils von einem Dichtring umgeben. Der Kanal 52 mündet in einen Ringraum 56, der zwischen der Ventilplatte 50 und dem Gehäuse 58 eines an die Ventilplatte 50 angesetzten Ventilantriebs 60 gebildet ist. Der Ringraum 56 umgibt einen Dichtsitz 62, in den der sich verjüngende Kanal 54 mündet. Ein durch den Ventilantrieb 60 betätigter Schließkörper 64 wirkt mit dem Dichtsitz 62 zusammen.

Der gesamte Ventilkörper ist von einer Ummantelung 66 umgeben, die auch die Ventilplatte 50 abdeckt.

Bei der in Figur 12 gezeigten Ausführungsvariante ist zwischen der Ventilplatte 50 und dem Ventilkörper, der in gleicher Weise ausgebildet ist wie bei der zuvor beschriebenen Ausführungsform, eine Zwischenplatte 70 eingefügt. Diese Zwischenplatte 70 ist mit zwei durchgehenden Kanälen 72, 74 versehen, die mit den Durchbrüchen 42, 44 fluchten und an die Kanäle 52, 54 der Ventilplatte 50 anschließen. Diese Zwischenplatte 70 eröffnet die Möglichkeit, Drosseln, Sensoren wie Druck-, Durchfluß- und Temperatursensoren aufzunehmen oder Schnittstellen zur Dosierung oder Probenentnahme anzubringen. Die Zwischenplatte 70 kann eingebaut oder ausgebaut werden, ohne den Ventilkörper aus einem Leitungssystem herauszunehmen. Bei herkömmlichen Bauformen von Ventilen ist hingegen der Dichtsitz im Inneren des Ventilkörpers ausgebildet, so daß für den Einbau oder Ausbau von Sensoren und dergleichen der Ventilkörper aus dem Leitungssystem herausgetrennt werden muß.

## Patentansprüche

1. Verfahren zur Herstellung eines Ventilgehäuses mit einem metallischen Ventilkörper durch Umformen eines zylindrischen Rohrabschnitts (10), der an seinen Enden durch Verschlußstempel (13a; 13b) verschlossen in eine Preßform (14; 15) eingebracht wird, wobei der Rohrabschnitt (10) in der Preßform (14; 15) mittels des Stempels (15) umgeformt wird, der quer zur Achse des Rohrabschnitts (10) von außen einwirkt, wobei die Enden des Rohrabschnitts (10) als rohrförmige Anschlußstutzen (10a; 10b) erhalten bleiben und der zwischen den Enden gelegene Mittelabschnitt (10c) auf einer Seite des Rohrabschnitts (10), die dem Boden des Ventilkörpers entspricht, unter Ausbildung einer konkaven Wölbung einwärts gedrückt wird, so daß gegenüber der Abflachung (20) zwei Fluid-Leitflächen (16; 18) gebildet werden, die ausgehend von der durch die Anschlußstutzen (10a, 10b) definierten Axialrichtung axial einwärts und zugleich in Richtung zu der Abflachung (20) hin orientiert sind sowie in einem gemeinsamen, der Abflachung (20) gegenüberliegenden Steg (24) zusammenlaufen, dadurch gekennzeichnet, daß
a) die Preßform eine Matrize (14) mit einer einen flachen Boden aufweisenden Einsenkung (14a) und der Stempel einen der Einsenkung gegenüberliegenden Höcker (15a) aufweist;
b) der Rohrabschnitt (10) mit einem Füllmaterial (12) ausgefüllt wird;
c) der Stempel (15) im Inneren des Rohrabschnitts (10) den zur Umformung erforderlichen Innendruck erzeugt, welcher durch das Füllmaterial (12) auf die Innenwandung des Rohrabschnitts (10) übertragen wird;
d) der Höcker (15a) die Rohrwandung bis in die Nähe der gegenüberliegenden Innenfläche des Rohrabschnitts einwärts drückt;
e) die Umformung des Rohrabschnitts (10) in einem einzigen Schritt kalt erfolgt; und
f) nach Entfernung des Füllmaterials (12) in dem der Abflachung (20) entsprechenden Teil der verformten Wandung des Rohrabschnitts (10) gegenüber dem Steg (24) wenigstens ein Durchbruch (26) angebracht wird, wobei der den Durchbruch (26) umgebende verbleibende Teil der Abflachung (20) eine Anschlußfläche bildet und die durch die Fluid-Leitflächen (16; 18) gebildeten Strömungswege in den Durchbruch (26) münden.

2. Verfahren nach Anspruch 1, dadurch gekennzeichnet, daß der Rohrabschnitt (10) in der Preßform kalt verformt wird.

3. Verfahren nach Anspruch 1 oder 2, dadurch gekennzeichnet, daß die Abflachung (20) eine aus der Mantelfläche des verformten Rohrabschnitts seitlich herausragende, konvexe Wölbung bildet.

4. Verfahren nach Anspruch 2, dadurch gekennzeichnet, daß als Füllmaterial (12) Sand verwendet wird.

5. Verfahren nach Anspruch 2, dadurch gekennzeichnet, daß als Füllmaterial (12) eine plastische Masse wie Wachs verwendet wird.

6. Verfahren nach Anspruch 2, dadurch gekennzeichnet, daß als Füllmaterial (12) eine elastisch verformbare Masse wie Gummi oder Elastomer verwendet wird.

7. Verfahren nach einem der vorstehenden Ansprüche, dadurch gekennzeichnet, daß die den Durchbruch (26) umgebende Anschlußfläche als ringförmiger Anschlußflansch zur Einspannung einer Membran (36) ausgebildet wird und der Steg (24) zu einer Dichtfläche ausgebildet wird, die zum Zusammenwirken mit der Membran (36) an ihren beiden Enden von der Berandung des Durchbruchs ausgeht und quer zur Achse des Rohrabschnitts verläuft.

8. Verfahren nach Anspruch 7, dadurch gekennzeichnet, daß die Abflachung in der Wandung des Rohrabschnitts kreisscheibenförmig ausgebildet und aus der Mantelfläche des Rohrabschnitts auswärts herausgedrückt wird, woraufhin der Durchbruch (26) durch Abtrennen des kreisscheibenförmigen Teils der Abflachung (20) gebildet wird.

9. Verfahren nach Anspruch 8, dadurch gekennzeichnet, daß um die den Durchbruch (26) berandende Wandung eine Flanschplatte (28) befestigt wird, die eine an den Außenumfang dieser Wandung angepaßte Öffnung aufweist.

10. Verfahren nach einem der Ansprüche 1 bis 7, dadurch gekennzeichnet, daß in der Abflachung zwei voneinander beabstandete Durchbrüche (42,44) ausgebildet werden und die durch die Fluid-Leitflächen gebildeten Strömungswege je in einen der zwei Durchbrüche (42,44) münden, wobei der Steg (24) bis an die Innenfläche der Abflachung (20) heran gedrückt und dort, insbesondere durch Verschweißen, abgedichtet wird.

11. Verfahren nach Anspruch 10, dadurch gekennzeichnet, daß auf die Abflachung (20) eine Ventilplatte (50) aufgesetzt wird, die zwei mit den Durchbrüchen (42,44) fluchtende, die Ventilplatte (50) durchquerende Kanäle (52,54) aufweist, von denen der erste in einen Dichtsitz (62) und der zweite in einen den Dichtsitz (62) umgebenden Ringraum (56) mündet.

12. Verfahren nach Anspruch 10 oder 11, dadurch gekennzeichnet, daß eine Zwischenplatte (70), die mit durchgehenden, mit den Durchbrüchen (42,44) fluchtenden Kanalabschnitten (72,74) versehen ist, zwischen dem Ventilkörper und der Ventilplatte (50) eingefügt wird.

13. Verfahren nach einem der vorstehenden Ansprüche, dadurch gekennzeichnet, daß der Ventilkörper mit einer Ummantelung (66) umgeben wird.

## Claims

1. A method for the production of a valve housing comprising a metallic valve member by shaping a cylindrical tube section (10) which, while closed at its ends by obturating stamps (13a; 13b), is placed in a pressing mold (14; 15), the tube section (10) being shaped in the pressing mold (14; 15) by means of the stamp (15) which acts perpendicularly to the axis of the tube section (10) from the outside, the ends of the tube section (10) being maintained as tubular port connections (10a; 10b) and the center section (10c) located between the ends being thrust inwards on one side of the tube section (10) which corresponds to the bottom of the valve member to form a concave curvature so that opposite to the flat (20) two fluid guide surfaces (16; 18) are formed, which starting from the axial direction as defined by the port connections (10a, 10b) are oriented axially inwards and simultaneously towards the flat (20) and furthermore converge in a common rib (24) located opposite to the flat (20), characterized in that
a) the pressing mold comprises a die (14) having a pit (14a) with a flat bottom and the stamp comprises a hump (15a) opposite to the pit;
b) the tube section (10) is charged with a filling material (12);
c) the stamp (15) produces in the interior of the tube section (10) the internal pressure necessary for shaping and which is transmitted by the filling material (12) to the inner wall of the tube section (10);
d) the hump (15a) thrusts the wall of the tube inwards as far as a point close to the opposite inner surface of the tube section;
e) the tube section (10) is shaped in a single step while cold; and
f) after removal of the filling material (12) in that part of the deformed wall of the tube section (10) which corresponds to the flat (20) at least one passage (26) is produced opposite to the rib (24), the remaining part of the flat (20) surrounding the passage (26) forming a connection surface and the flow paths formed by the fluid guide surfaces (16; 18) opening into the passage (26).

2. The method as claimed in claim 1, characterized in that the tube section (10) is cold formed in the pressing mold.

3. The method as claimed in claim 1 or 2, characterized in that the flat (20) forms a convex curvature extending laterally from the peripheral surface of the deformed tube section.

4. The method as claimed in claim 2, characterized in that as filling material (12) sand is employed.

5. The method as claimed in claim 2, characterized in that as filling material (12) a composition with a plastic nature such as wax is employed.

6. The method as claimed in claim 2, characterized in that as filling material (12) an elastically deformable composition such as rubber or an elastomer is employed.

7. The method as claimed in any one of the preceding claims, characterized in that the connection surface surrounding the passage (26) is designed in the form of an annular connection flange for clamping a diaphragm (36) in place and the rib (24) is designed to form a sealing surface, which for cooperation with the diaphragm (36) starts at its two ends from the rim of the passage and extends transversely to the axis of the tube section.

8. The method as claimed in claim 7, characterized in that the flat in the wall of the tube section is designed in the form of a circular disk and is thrust outwards out of the peripheral surface of the tube section, following which the passage (26) is formed by cutting off the circular disk-shaped part of the flat (20).

9. The method as claimed in claim 8, characterized in that around the wall forming a rim of the passage (26) a flange plate (28) is attached which has an opening adapted to the outer periphery of this wall.

10. The method as claimed in any one of the claims 1 to 7, characterized in that two passages (42, 44) spaced apart from each other are formed in the flat and each of the flow paths defined by the fluid guide surfaces open into a respective one of the two passages (42, 44), the rib (24) being thrust as far as the inner surface of the flat (20) where it is sealed off, more particularly by welding.

11. The method as claimed in claim 10, characterized in that the flat (20) has a valve plate (50) placed thereon which has two channels (52, 54) aligned with the passages (42, 44) and extending through the valve plate (50), the first one of which opens into a seal seat (62) and the second one opens into an annular space (56) surrounding the seal seat (62).

12. The method as claimed in claim 10 or 11, characterized in that an intermediate plate (70) which is provided with continuous channel sections (72, 74) aligned with the passages (42, 44) is inserted between the valve member and the valve plate (50).

13. The method as claimed in any one of the preceding claims, characterized in that the valve member is surrounded by a casing (66).

## Revendications

1. Procédé pour fabriquer un carter de valve comportant un corps de valve métallique par mise en forme d'un tronçon de tube cylindrique (10) qui est introduit dans un moule à pression (14 ; 15) en étant fermé à ses extrémités par des poinçons de fermeture (13a ; 13b), le tronçon de tube (10) étant mis en forme dans le moule (14 ; 15) au moyen du poinçon (15) qui agit depuis l'extérieur perpendiculairement à l'axe du tronçon de tube (10), les extrémités du tronçon de tube (10) étant conservées sous forme de manchons de raccordement tubulaires (10a ; 10b) et le tronçon médian (10c) situé entre les extrémités étant pressé vers l'intérieur en formant un bombement concave sur un côté du tronçon de tube (10) qui correspond au fond du corps de valve, de sorte que deux surfaces de guidage de fluide (16 ; 18) sont formées en vis-à-vis de l'aplatissement (20), qui sont orientées à partir de la direction axiale définie par les manchons de raccordement (10a, 10b), axialement vers l'intérieur et simultanément en direction de l'aplatissement (20), et qui convergent dans une âme (24) commune en vis-à-vis de l'aplatissement (20), caractérisé en ce que
a) le moule comporte une matrice (14) qui comprend un creux (14a) présentant un fond plat, et le poinçon comporte une bosse (15a) en vis-à-vis du creux ;
b) le tronçon de tube (10) est rempli d'un matériau de remplissage (12) ;
c) le poinçon (15) engendre à l'intérieur du tronçon de tube (10) la pression intérieure nécessaire à la mise en forme, qui est transmise par le matériau de remplissage (12) à la paroi intérieure du tronçon de tube (10) ;
d) la bosse (15a) presse la paroi du tube vers l'intérieur jusqu'à proximité de la surface intérieure opposée du tronçon de tube ;
e) la mise en forme du tronçon de tube (10) se fait à froid en une seule étape ;
f) après avoir enlevé le matériau de remplissage (12), on ménage dans la partie de la paroi déformée du tronçon de tube (10), qui correspond à l'aplatissement (20), au moins une traversée (26) en vis-à-vis de l'âme (24), la partie résiduelle de l'aplatissement (20) qui entoure la traversée (26) formant une surface de raccordement et les voies d'écoulement formées par les surfaces de guidage de fluide (16 ; 18) débouchant dans la traversée (26).

2. Procédé selon la revendication 1, caractérisé en ce que le tronçon de tube (10) est déformé à froid dans le moule à pression.

3. Procédé selon l'une ou l'autre des revendications 1 et 2, caractérisé en ce que l'aplatissement (20) forme un bombement convexe qui fait saillie latéralement à partir de la surface enveloppe du tronçon de tube déformé.

4. Procédé selon la revendication 2, caractérisé en ce que l'on utilise du sable comme matériau de remplissage (12).

5. Procédé selon la revendication 2, caractérisé en ce que l'on utilise comme matériau de remplissage (12) une masse plastique telle que de la cire.

6. Procédé selon la revendication 2, caractérisé en ce que l'on utilise comme matériau de remplissage (12) une masse élastiquement déformable telle que du caoutchouc ou de l'élastomère.

7. Procédé selon l'une quelconque des revendications précédentes, caractérisé en ce que la surface de raccordement entourant la traversée (26) est réalisée sous forme d'une bride de raccordement annulaire pour serrer une membrane (36), et en ce que l'âme (24) est réalisée sous forme d'une surface d'étanchement qui, pour coopérer avec la membrane (36), part à ses deux extrémités depuis la bordure de la traversée et s'étend transversalement à l'axe du tronçon de tube.

8. procédé selon la revendication 7, caractérisé en ce que l'aplatissement dans la paroi du tronçon de tube est réalisé en forme de disque circulaire et est pressé vers l'extérieur hors de la surface enveloppe du tronçon de tube, suite à quoi la traversée (26) est formée par séparation de la partie en forme de disque circulaire de l'aplatissement (20).

9. Procédé selon la revendication 8, caractérisé en ce que l'on fixe autour de la paroi entourant la traversée (26) une plaque à brides (28) qui présente une ouverture adaptée à la périphérie extérieure de cette paroi.

10. Procédé selon l'une quelconque des revendications 1 à 7, caractérisé en ce que l'on ménage dans l'aplatissement deux traversées (42, 44) écartées l'une de l'autre, et en ce que les voies d'écoulement formées par les surfaces de guidage de fluide débouchent chacune dans l'une des deux traversées (42, 44), l'âme (24) étant pressée jusque contre la surface intérieure de l'aplatissement (20) et y étant étanchée en particulier par soudage.

11. Procédé selon la revendication 10, caractérisé en ce que l'on pose sur l'aplatissement (20) une plaque de soupape (50) qui présente deux canaux (52, 54) en alignement avec les traversées (42, 44) et traversant la plaque de soupape (50), dont le premier débouche dans un siège d'étanchéité (62) et dont le second débouche dans une chambre annulaire (56) entourant le siège d'étanchéité (62).

12. Procédé selon la revendication 10 ou 11, caractérisé en ce qu'une plaque intercalaire (70) qui est pourvue de tronçons de canal (72, 74) en alignement avec les traversées (42, 44) est introduite entre le corps de valve et la plaque de soupape (50).

13. Procédé selon l'une quelconque des revendications précédentes, caractérisé en ce que le corps de valve est entouré d'une enveloppe (66).
